# EUROPÄISCHE PATENTANMELDUNG

(11) **EP 4 299 958 A1**
(43) Veröffentlichungstag der Anmeldung: **03.01.2024**
(21) Anmeldenummer: 23177322.7
(22) Anmeldetag: 05.06.2023
(51) Int. Cl.: F16K 31/06, F16K 41/12, F23D 14/46, F23N 1/00

(54) **VENTIL UND VERFAHREN ZUM BETRIEB**

(30) Priorität: 13.06.2022 DE 102022114841; 03.04.2023 DE 102023108485
(71) Anmelder: Innovatherm Prof. Dr. Leisenberg GmbH & Co. KG, 35510 Butzbach (DE)
(72) Erfinder: Uhrig, Wolfgang, 35321 Laubach (DE)
(74) Vertreter: advotec.

(57) **Zusammenfassung**

Die Erfindung betrifft ein Ventil (10), insbesondere für Gase, eine Brennstoffdosiereinheit für einen Ofen mit einem Ventil, ein Verfahren zum Betrieb eines Ofens und eine Verwendung eines Ventils, wobei das Ventil ein Ventilgehäuse (11) und einen im Ventilgehäuse angeordneten verschiebbaren Kolben (13) aufweist, wobei der Kolben so gegenüber einem Ventilsitz (24) des Ventilgehäuses bewegbar ist, dass zwei Kammern (20, 21) gegeneinander absperrbar sind, wobei zwischen dem Kolben und einer Kolbenführungseinrichtung (14) eine Kolbendichteinrichtung (34) zur Abdichtung der Kammern ausgebildet ist, wobei die Kolbendichteinrichtung eine Membran (35) aufweist, die ein Dichtelement (36) ausbildet.

## Beschreibung

Die Erfindung betrifft ein Ventil, insbesondere für Gase, Luft, Sauerstoff, Brenngas, Erdgas, Wasserstoff oder dergleichen, eine Brennstoffdosiereinheit mit einem Ventil und einen Ofen sowie ein Verfahren zum Betrieb eines Ofens, wobei das Ventil ein Ventilgehäuse und einen im Ventilgehäuse angeordneten verschiebbaren Kolben aufweist, wobei der Kolben so gegenüber einem Ventilsitz des Ventilgehäuses bewegbar ist, dass zwei Kammern gegeneinander absperrbar sind, wobei zwischen dem Kolben und einer Kolbenführungseinrichtung eine Kolbendichteinrichtung zur Abdichtung der Kammern ausgebildet ist.

Derartige Ventile werden regelmäßig für gasförmige Medien und damit auch für Brennstoffdosiereinheiten von Öfen verwendet. Die bekannten Ventile sind mit einem längsbeweglichen, häufig federbelasteten Kolben ausgebildet, der in einer Ruhestellung aufgrund einer am Kolben vorgesehenen Feder einen Ventilsitz unabhängig von einem Gasdruck abdichtet. Der längsbewegliche Kolben ist in einer Führung gelagert, wobei zwischen dem Kolben und einer Kolbenführungseinrichtung eine Kolbendichteinrichtung vorgesehen sein kann. Dies ist insbesondere dann der Fall, wenn der Kolben druckentlastet ist, d.h. dass Wirkräume des Kolbens einer der gegeneinander absperrbaren Kammern zugeordnet sind. Dies kann beispielsweise mittels eines Kanals oder einer Leitung erfolgen, die die Wirkräume miteinander verbindet.

Da bei für Gase vorgesehenen, derartigen Ventilen, nur relativ kurze Kolbenhübe für einen ausreichenden Gasdurchfluss notwendig sind, können diese Ventile mit vergleichsweise hohen Schaltfrequenzen betrieben werden. Dies ist insbesondere der Fall, wenn Brenngase, wie beispielsweise Erdgas, mittels eines Ventils an einem Brenner eines Ofens dosiert werden. Nachteilig ist hier, dass sich nach einer Anzahl von Schaltzyklen Materialpartikel im Bereich der Kolbendichteinrichtung, die beispielsweise durch einen O-Ring oder dergleichen ausgebildet sein kann, ansammeln, die einen Verschleiß der Dichtung befördern. Dieser nachteilige Effekt tritt dann besonders schnell in Erscheinung, wenn als ein Medium reine Gase verwendet werden, da diese gegenüber beispielsweise Druckluft keine Bestandteile enthalten, die zu einer Schmierung der Kolbenführung beitragen. Ein vergleichbares Ventil ist beispielsweise aus der EP 2 129 336 B1 bekannt.

Weiter sind derartige Ventile regelmäßig nur mit Einschränkungen zur Dosierung unterschiedlicher Gase geeignet. Wenn beispielsweise Brenngase dosiert werden sollen, die einen vergleichsweise geringen Heizwert bzw. Brennwert aufweisen, muss eine vergleichsweise wesentlich größere Menge an Brenngas in einem Brennraum eines Ofens dosiert werden. Gleichwohl soll das Ventil mit einer hohen Anzahl an Schaltzyklen betrieben werden können, damit eine Dosierung des Brenngases möglichst genau erfolgen kann. Darüber hinaus soll das Ventil bzw. der Kolben aus Gründen der Sicherheit sehr schnell geschlossen werden können. Um einen Ofen bzw. eine Brennstoffdosiereinheit auf ein anderes Gas als Brennstoff umstellen zu können, bedarf es daher einer Änderung der zur Dosierung des Gases vorgesehenen Ventile. So muss ein Durchsatz an Brenngas wesentlich erhöht werden, wenn beispielsweise Wasserstoff als Brenngas verwendet werden soll. Dies ist jedoch nur dadurch möglich, dass ein Druck bzw. Betriebsdruck und/oder ein Öffnungsquerschnitt des Ventils wesentlich vergrößert wird. Eine Vergrößerung eines Öffnungsquerschnitts ist u.a. dadurch möglich, dass ein Kolbenhub des Kolbens des Ventils vergrößert wird, wobei diese Maßnahme dann zu einem erhöhten Verschleiß der Kolbendichteinrichtung führt, was eine Lebensdauer des Ventils nachteilig beeinflusst. Darüber hinaus kann ein Kolbenhub nur dann ohne wesentliche Veränderungen vergrößert werden, wenn hinsichtlich einer Magnetkraft entsprechende Reserven vorhanden sind.

Der vorliegenden Erfindung liegt daher die Aufgabe zugrunde, ein Ventil, eine Brennstoffdosiereinheit, einen Ofen und ein Verfahren zum Betrieb eines Ofens vorzuschlagen, mit dem unterschiedlichste Gase dosiert werden können und ein Verschleiß einer Kolbenabdichtung vermindert wird.

Diese Aufgabe wird durch ein Ventil mit den Merkmalen des Anspruchs 1, eine Brennstoffdosiereinheit mit den Merkmalen des Anspruchs 15, einen Ofen mit den Merkmalen des Anspruchs 16, ein Verfahren zum Betrieb eines Ofens mit den Merkmalen des Anspruchs 17 und eine Verwendung eines Ventils mit den Merkmalen des Anspruchs 18 gelöst.

Das erfindungsgemäße Ventil, insbesondere für Gase, Luft, Sauerstoff, Brenngas, Erdgas, Wasserstoff oder dergleichen, weist ein Ventilgehäuse und einen im Ventilgehäuse angeordneten verschiebbaren Kolben auf, wobei der Kolben so gegenüber einem Ventilsitz des Ventilgehäuses bewegbar ist, dass zwei Kammern gegeneinander absperrbar sind, wobei zwischen dem Kolben und einer Kolbenführungseinrichtung eine Kolbendichteinrichtung zur Abdichtung der Kammern ausgebildet ist, wobei die Kolbendichteinrichtung eine Membran aufweist, die ein Dichtelement ausbildet.

Das erfindungsgemäße Ventil ist so ausgebildet, dass es zur Dosierung einer Vielzahl unterschiedlicher Gase verwendet werden kann. Dies wird insbesondere dadurch erreicht, dass mit dem Ventil eine hohe Anzahl an Schaltzyklen bei einem großen Kolbenhub ausgeführt werden kann. So kann einerseits ein großer Volumenstrom an Gas durch den großen Kolbenhub dosiert werden und andererseits, wenn dies gewünscht ist, ein vergleichsweise geringer Volumenstrom an Gas, wobei die Anzahl an Schaltzyklen pro Zeiteinheit dann verringert wird. Eine Vergrößerung eines Ventilsitzes ist prinzipiell auch möglich, jedoch erhöht sich hierdurch eine vom Kolben bewegbare Masse, was wiederum eine Anzahl an Schaltzyklen begrenzt. Darüber hinaus werden eine Abdichtung und ein Verschleiß des Ventilsitzes bei einer Druckerhöhung zur Förderung des jeweiligen Gases nachteilig beeinflusst. Da es sich bei dem Kolben um einen druckentlasteten Kolben handelt, dichtet die Kolbendichteinrichtung den Kolben gegenüber der Kolbenführungseinrichtung stets so ab, dass kein Gas von einer der Kammern in die andere Kammer über die Kolbenführungseinrichtung strömen kann. Erfindungsgemäß ist dabei vorgesehen, dass die Kolbendichteinrichtung eine Membran aufweist, die ein Dichtelement ausbildet. Eine Membran hat den Vorteil, dass diese nicht unmittelbar zwischen Kolben und Kolbenführungseinrichtung angeordnet sein muss. So kann die Membran auch so an dem Ventilgehäuse bzw. einer Seite des Ventilgehäuses und im bzw. am Kolben angeordnet sein, dass bei einem Schaltzyklus des Kolbens keine Reibkräfte, wie dies beispielsweise bei einem O-Ring der Fall ist, auf die Membran wirken. Unter einer Membran wird hier ein vergleichsweise dünnes Dichtelement mit einer im Verhältnis zu einer Dicke großen flächigen Ausdehnung verstanden. Da die Membran zur vollständigen Abdichtung der Kammern ausgebildet ist, ist ein Material der Membran gasundurchlässig. Durch die Verwendung der Membran als Dichtelement, ist die Kolbendichteinrichtung hinsichtlich ihres Verschleißes im Wesentlichen unabhängig von einer Länge eines Kolbenhubs und eines eventuell erhöhten Betriebsdrucks des Ventils. Gleichfalls muss ein Ventilsitz, ein Kolbendurchmesser oder dergleichen, nicht zwangsläufig vergrößert werden, wodurch mit dieser einfachen konstruktiven Maßnahme das Ventil zur Dosierung unterschiedlichster Gase ausgebildet werden kann, und wodurch eine Umstellung auf eine andere Gasart einfach ermöglicht und das Ventil vielfältig nutzbar wird. Darüber hinaus ist dadurch, dass zwischen dem Kolben und der Kolbenführungseinrichtung bzw. einem dazwischen ausgebildeten Spalt kein Dichtelement mehr angeordnet ist, ein Verschleiß vermindert, da keine Reibung am Dichtelement auftritt bzw. das Dichtelement reibungsfrei ist und auch keine am Dichtelement anhaftende Verschmutzungen die Reibeigenschaften von Kolbenführungseinrichtung und Kolben sowie eine Dichtigkeit negativ beeinflussen können.

Das Dichtelement kann elastisch sein, bevorzugt kann das Dichtelement als eine Elastomerdichtung oder Gummidichtung ausgebildet sein. So kann das Dichtelement dann auch während einer Bewegung des Kolbens diesem folgen und während dieser Bewegung verformt werden. Wenn das Dichtelement zumindest teilweise bzw. vollständig aus Gummi besteht, wird auch noch eine besonders gute Anpassung an eventuelle Klemmflächen des Kolbens und der Kolbenführungseinrichtung bzw. dem Ventilgehäuse ermöglicht, sodass eine hohe Dichtigkeit der Kolbendichteinrichtung erzielt werden kann. Weiter kann dadurch, dass das Dichtelement elastisch ist, eine Federbewegung des Dichtelements zur Rückstellung des Kolbens genutzt werden. Gleichwohl kann das Dichtelement auch so bemessen sein, dass eine elastische Verformung des Dichtelements keine wesentlichen Kräfte auf eine Bewegung des Kolbens in der Kolbenführungseinrichtung bewirkt. Folglich kann das Dichtelement während einer Bewegung des Kolbens verformbar ausgebildet sein. Eine Verformung des Dichtelements kann insbesondere dann auftreten, wenn der Kolben in einer Öffnungsstellung positioniert ist. Der Kolben kann dann mit Hilfe des Dichtelements auch in eine Absperrstellung bewegt werden. Dann kann auch eine eventuell zur Rückstellung des Kolbens vorgesehene Feder kleiner dimensioniert sein, da ein Teil der erforderlichen Federkraft zur Rückstellung des Kolbens von dem Dichtelement bewirkt werden kann. In einer Ruhestellung des Kolbens kann das Dichtelement dann in einer Ruhelage, d.h. unverformt, angeordnet sein.

Das Dichtelement kann kreisringförmig und/oder scheibenförmig ausgebildet sein. Ein als Scheibe oder Ring ausgebildetes Dichtelement ist besonders einfach herstellbar. Das Dichtelement kann auch an einem beliebigen Ende des Kolbens angeordnet sein.

Das Dichtelement kann an dem Kolben und/oder an dem Ventilgehäuse geklemmt und/oder formschlüssig fixiert sein. Durch das Klemmen des Dichtelements kann neben einer Fixierung des Dichtelements auch eine Abdichtung des Dichtelements an dem Ventilgehäuse bzw. dem Kolben ermöglicht werden. Ergänzend oder alternativ zu einer Klemmung des Dichtelements kann auch eine formschlüssige Fixierung des Dichtelements gegeben sein. Dies kann beispielsweise dadurch erfolgen, dass das Dichtelement in einer eigens dafür vorgesehene Ausnehmung an dem Ventilgehäuse bzw. dem Kolben eingesetzt ist.

Weiter kann das Dichtelement mit einem Innenrand und einem Außenrand ausgebildet sein, wobei der Innenrand an dem Kolben und der Außenrand an dem Ventilgehäuse fixiert sein kann. Das Dichtelement kann so zwischen dem Innenrand und dem Außenrand in einer Montageposition bzw. bei einer Bewegung des Kolbens gespannt sein. Dies ist besonders dann vorteilhaft, wenn vergleichsweise hohe Drücke mit dem Dichtelement aufgenommen werden müssen. Das Dichtelement kann jedoch auch so ausgebildet sein, dass zwischen dem Innenrand und dem Außenrand eine Wulst bzw. Sicke oder ein Balg ausgebildet ist, der eine Bewegung des Kolbens nicht behindert.

Das Dichtelement kann mit Wülsten ausgebildet sein, die jeweils an dem Innenrand und dem Außenrand des Dichtelements ausgebildet sein können. Die Wülste können jeweils einen runden oder einen anderen beliebigen Querschnitt aufweisen. An dem Ventilgehäuse oder in dem Kolben können übereinstimmend ausgebildete Ausnahmen vorgesehen sein, in die die jeweiligen Wülste eingesetzt sind. So kann eine genauere Lage des Dichtelements bei einer Montage sichergestellt werden, und ein Verrutschen des Dichtelements bzw. eine Bewegung des Innenrands und des Außenrands in Folge einer Bewegung des Kolbens können verhindert werden.

Eine der Kammern kann einer Leitung zugeordnet sein, die zwei Wirkräume des Kolbens dauernd verbinden kann, wobei die Wirkräume so ausgebildet sein können, dass der Kolben druckentlastet ist. Dadurch kann das Ventil als ein Sicherheitsventil für gasförmige Medien verwendet werden. Die so erzielbare Druckentlastung des Kolbens ermöglicht es den Kolben in einer Absperrstellung zu verbringen, wenn ein Antrieb des Kolbens bzw. eine Steuereinrichtung des Ventils ausfällt. Wesentlich hierfür ist, dass in der Ruhestellung des Kolbens der Ventilsitz unabhängig von einem Gasdruck abdichtet. Die Leitung zur Verbindung der beiden Wirkräume des Kolbens kann im Kolben ausgebildet sein, beispielsweise in Art einer Durchgangsbohrung in Längsrichtung des Kolbens. Die Leitung ist so besonders einfach herstellbar. Auch ist es vorteilhaft, wenn das Ventil eine Feder aufweist, mittels der der Kolben in einer Stellung positionierbar ist. Im Falle eines Ausfalls einer Kolbensteuerung bzw. Betätigungseinrichtung des Kolbens kann der Kolben dann mittels der Feder in die Absperrstellung bewegt werden. Je nach gewünschter Funktion des so ausgebildeten Sicherheitsventils kann auch umgekehrt eine Bewegung des Kolbens in die Öffnungsstellung vorgesehen sein. Wesentlich ist, dass der längsbewegliche Kolben federbelastet ist. Alternativ oder ergänzend zu einer Feder kann eine Schließkraft auch durch die Membran erzeugt werden.

Das Ventil kann nutzbar für einen Druck von ≥ 1 bar, ≥ 2 bar, ≥ 3 bar oder ≥ 4 bar ausgebildet sein. Beispielsweise für einen Druck von ≥ 0 bar bis 4 bar. Das Ventil ist damit für höhere Drücke verwendbar, sodass mit dem Ventil anstelle von beispielsweise Erdgas Wasserstoff dosiert werden kann. Wasserstoff weist einen vergleichsweise geringeren Brennwert bzw. Heizwert als Erdgas auf, was einen höheren Druck erfordert, um eine vergleichsweise größere Menge Wasserstoff verbrennen zu können. Somit wird mittels des Ventils eine Verwendung bzw. Umstellung einer Brennstoffdosiereinheit auf beispielsweise Wasserstoff möglich.

Alternativ oder ergänzend kann das Ventil nutzbar für einen Druck ≤ 1 bar, ≤ 2 bar, ≤ 3 bar, ≤ 4 bar oder ≤ 5 bar ausgebildet sein. Aus den zuvor genannten minimalen und maximalen Drücken können sich alle denkbaren Bereiche eines Drucks ergeben, für das das Ventil nutzbar ist.

Das Ventil kann ein direkt gesteuertes Magnetventil sein, wobei der Kolben mit einem Elektromagnet betätigt werden kann. Gegenüber einem mit einem Servomotor oder dergleichen angesteuerten Ventilkolben kann mit dem direkt gesteuerten Magnetventil bzw. dem Elektromagneten ein wesentlich höherer Anteil an Schaltzyklen ausgebildet werden.

Mit dem Ventil können zumindest 100, 200, 300, 400 oder 500 Schaltzyklen pro Minute ausgebildet werden. Das Ventil kann mit zumindest 500 Millionen Schaltzyklen pro Lebensdauer ausgebildet sein.

Das Ventil kann mit einem Kolbenhub von 1, 2, 3 oder 4 mm ausgebildet sein. Je nach Größe des Kolbenhubs kann mit einem vergleichsweise großen Kolbenhub ein größerer Volumenstrom bei einer Öffnung des Ventils ausgebildet werden.

Zwischen dem Kolben und dem Ventilsitz kann eine Ventildichteinrichtung ausgebildet sein, mittels der in einer Absperrstellung eine Abdichtung der beiden Kammern erfolgen kann, wobei der Kolben mittels einer Feder in die Absperrstellung bewegt werden kann. Die Ventildichteinrichtung kann aus einem elastischen Werkstoff bestehen, wie beispielsweise Gummi, und als Scheibe oder Ring ausgebildet sein. Weiter kann die Ventildichteinrichtung am Kolben oder am Ventilsitz befestigt sein.

Zur Erzielung einer vorteilhaften Druckentlastung des Ventils können die Kolbendichteinrichtung und die Ventildichteinrichtung so ausgebildet und angeordnet sein, dass den Wirkräumen zugehörige Wirkflächen des Kolbens im Wesentlichen gleich groß sind. Das Ventil kann dann wahlweise von der einen oder der anderen Kammer mit einem Mediendruck beaufschlagt werden. Auch können die Wirkflächen so bemessen sein, dass eine Rückstellkraft einer Feder zur Positionierung des Kolbens zumindest teilweise berücksichtigt ist.

Das Ventil kann nach den Anforderungen der DIN EN 161 in der zum Prioritätstag gültigen Fassung ausgebildet sein.

Die erfindungsgemäße Brennstoffdosiereinheit, Brenner oder dergleichen, umfasst zumindest ein erfindungsgemäßes Ventil, bevorzugt zwei erfindungsgemäße Ventile. Über ein erstes Ventil kann Brenngas, über ein zweites Ventil Luft oder Sauerstoff in einem Brennraum eines Ofens mittels der Brennstoffdosiereinheit dosiert werden. Beide Ventile können, unabhängig vom zu dosierenden Medium, identisch ausgebildet sein.

Der erfindungsgemäße Ofen, Brennofen, Tunnelofen oder dergleichen, umfasst zumindest eine erfindungsgemäße Brennstoffdosiereinheit. Vorzugsweise umfasst der Ofen eine Vielzahl Brennstoffdosiereinheiten. Über die Brennstoffdosiereinheit kann Gas in den Ofen eingeblasen werden. Der Ofen kann mittels der Brennstoffdosiereinheit mit einer stöchiometrischen Verbrennung betrieben werden. Vorteilhafte Ausführungsformen eines Ofens ergeben sich aus den Merkmalsbeschreibungen der auf den Anspruch 1 rückbezogenen Unteransprüche.

Bei dem erfindungsgemäßen Verfahren zum Betrieb eines Ofens, Brennofens, Tunnelofens oder dergleichen, mit zumindest einer Brennstoffdosiereinheit mit zumindest einem Ventil, wird in einem Ventilgehäuse des Ventils ein Kolben so gegenüber einem Ventilsitz des Ventilgehäuses bewegt, dass zwei Kammern gegeneinander abgesperrt werden, wobei mittels einer Kolbendichteinrichtung, die zwischen dem Kolben und einer Kolbenführungseinrichtung ausgebildet ist, die Kammern abgedichtet werden, wobei von einer Membran der Kolbendichteinrichtung ein Dichtelement ausgebildet wird, wobei die Membran während einer Bewegung des Kolbens verformt wird. Zu den Vorteilen des erfindungsgemäßen Verfahrens wird auf die Vorteilsbeschreibung des erfindungsgemäßen Ventils verwiesen. Weitere vorteilhafte Ausführungsformen des Verfahrens ergeben sich aus den Merkmalsbeschreibungen der auf den Anspruch 1 rückbezogenen Unteransprüche.

Bei der erfindungsgemäßen Verwendung eines Ventils zur Dosierung von Wasserstoff mit einer Brennstoffdosiereinheit eines Ofens, Brennofens, Tunnelofens oder dergleichen, weist das Ventil ein Ventilgehäuse und einen im Ventilgehäuse angeordneten verschiebbaren Kolben auf, wobei der Kolben so gegenüber einem Ventilsitz des Ventilgehäuses bewegbar ist, dass zwei Kammern gegeneinander absperrbar sind, wobei zwischen dem Kolben und einer Kolbenführungseinrichtung eine Kolbendichteinrichtung zur Abdichtung der Kammern ausgebildet ist, wobei die Kolbendichteinrichtung eine Membran aufweist, die ein Dichtelement ausbildet. Zu den vorteilhaften Wirkungen der Verwendung des Ventils zur Dosierung von Wasserstoff wird auf die Vorteilsbeschreibung des erfindungsgemäßen Ventils verwiesen. Weitere vorteilhafte Ausführungsformen der Verwendung ergeben sich aus den Merkmalsbeschreibungen der auf den Anspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1:**: eine Ausführungsform eines Ventils in einer Längsschnittansicht;
- **Fig. 2:**: eine vergrößerte Detailansicht aus **Fig. 1****.**

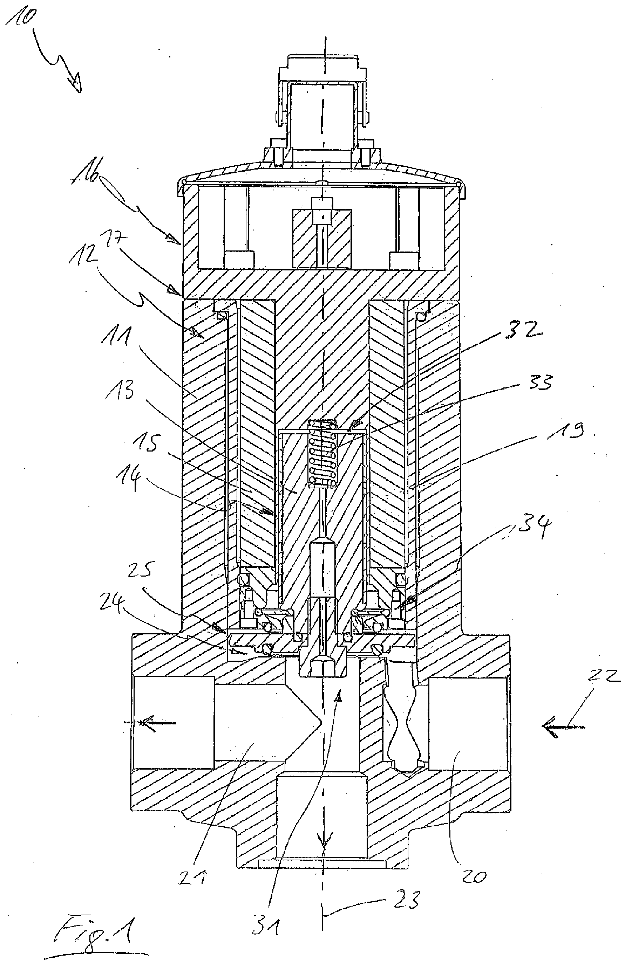

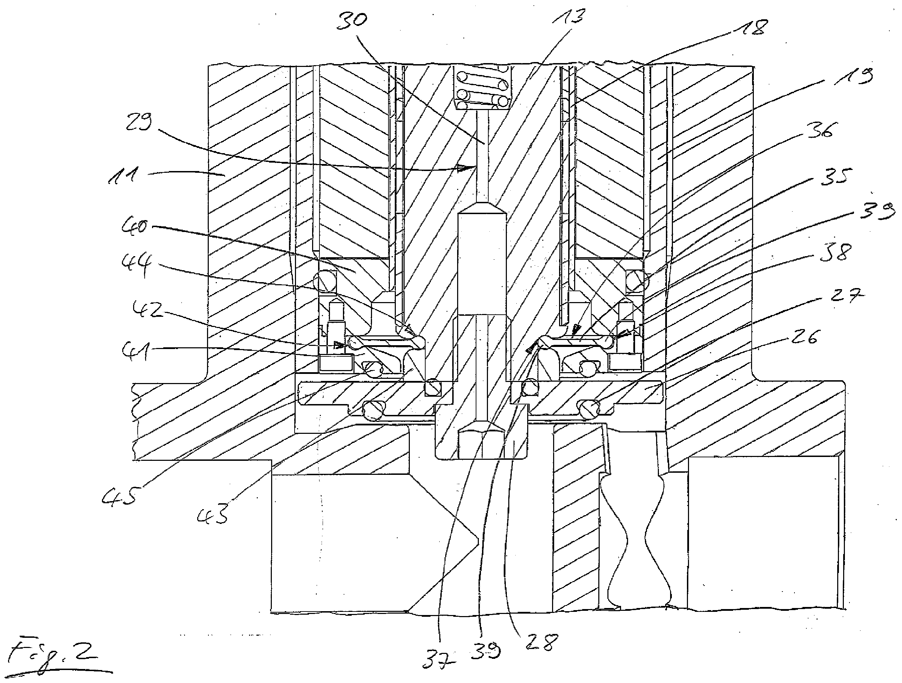

Eine Zusammenschau der **Fig. 1** und **2** zeigt ein Ventil 10 mit einem Ventilgehäuse 11 und einer Betätigungsvorrichtung 12. Die Betätigungsvorrichtung 12 umfasst einen Kolben 13, eine hülsenartig ausgebildete Kolbenführungseinrichtung 14 zur längsbewegliche Aufnahme des Kolbens 13 und eine Elektromagnetspule 15 sowie einen die Elektromagnetspule 15 aufnehmenden Halter 16 bzw. Magnetkern, der mit einem flanschartigen Rand 17 das Ventilgehäuse 11 abschließt und die Elektromagnetspule 15 abdeckt sowie einen elektrischen Anschlussraum für Energie aufweist. Weiter ist eine ringförmige Gleitbuchse 18 aus Stahl und eine Dichtbuchse 19 vorgesehen, welche den Halter 16 bzw. die Kolbenführungseinrichtung 14 zumindest teilweise umgeben und so den Kolben 13 koaxial umgreifen. Die Gleitbuchse 18 hat dabei keine Dichtfunktion. Die Dichtbuchse 19 schließt einen hier nicht dargestellten Magnetkreis.

Das Ventilgehäuse 11 bildet eine erste Kammer 20 und eine zweite Kammer 21 aus, die hier nicht näher dargestellte Anschlussgewinde zum Anschluss hier nicht gezeigter Medienleitungen aufweisen. In dem Ausführungsbeispiel ist eine mit einem Pfeil 22 gekennzeichnete, bevorzugte Durchflussrichtung eines Mediums von der Kammer 20 zur Kammer 21 vorgesehen.

Koaxial zu einer Längsachse 23 des Ventilgehäuses 11 ist im Ventilgehäuse 11 ein Ventilsitz 24 ausgebildet. Der Ventilsitz 24 ist mittels einer Ventildichteinrichtung 25 verschließbar. Die Ventildichteinrichtung 25 ist aus einer Scheibe 26 mit einem Dichtring 27 zur Abdichtung des Ventilsitzes 24 gebildet und am Kolben 13 befestigt. Weiter ist im Kolben 13 und auf der Scheibe 26 sowie einer Schraube 28, die die Scheibe 26 an den Kolben 13 haltert, eine Leitung 29 ausbildende, Durchgangsbohrung 30 vorgesehen. Die mediendurchlässige Durchgangsbohrung 30 verbindet einen, der Kammer 21 zugeordneten und somit in der Kammer 21 befindlichen ersten Wirkraum 31 mit einem zweiten Wirkraum 32 des Kolbens 13, welche zwischen der Kolbenführungseinrichtung 14 und dem Kolben 13 ausgebildet ist. Im zweiten Wirkraum 32 ist eine Feder 33 koaxial zur Längsachse 23 zwischen dem Kolben 13 und der Kolbenführungseinrichtung 14 angeordnet, welche eine Rückstellung des Kolbens 13 und der hier gezeigten Öffnungsstellung in eine Absperrstellung des Ventils 10 bewirkt.

Da aufgrund der Durchgangsbohrung 30 eine mögliche Druckdifferenz zwischen dem ersten Wirkraum 31 und dem zweiten Wirkraum 32 des Kolbens 13 im Wesentlichen immer ausgeglichen wird, ist der erste Wirkraum 31 gegenüber der Kammer 20 durch eine im Bereich der Scheibe 26 angeordnete Kolbendichteinrichtung 34 abgedichtet. Dies ist insofern notwendig, da in einer Absperrstellung zwischen der Kammer 20 und dem zweiten Wirkraum 32 die gleiche Druckdifferenz besteht wie zwischen der Kammer 20 und der Kammer 21. In der hier gezeigten teilweisen Öffnungsstellung des Kolbens 13 wird die Elektromagnetspule 15 mit Energie versorgt, was eine Bewegung des Kolbens 13 entlang der Längsachse 23 in Richtung des zweiten Wirkraums 32 gegen die Feder 33 zur Folge hat. So wird auch die Scheibe 26 mit dem Dichtring 27 vom Ventilsitz 24 abgehoben, wodurch ein Durchfluss eines Mediums von der Kammer 20 zur Kammer 21 ermöglicht wird. Der Kolben 13 wird dabei relativ zur Kolbenführungseinrichtung 14 bewegt.

Die Kolbendichteinrichtung 34 weist eine Membran 35 auf, die ein Dichtelement 36 ausbildet. Das Dichtelement 36 besteht aus Gummi und ist kreisringförmig mit einem Innenrand 37 und einem Außenrand 38 ausgebildet. An dem jeweiligen Innenrand 37 und dem Außenrand 38 ist eine im Wesentlichen kreisförmige Wulst 39 ausgebildet. Das Dichtelement ist an dem Kolben 13 und dem Ventilgehäuse 11 bzw. an einem scheibenförmigen Ring 40 des Ventilgehäuses 11 geklemmt bzw. formschlüssig mit diesen verbunden. Hierzu ist ein Klemmring 41 auf den Ring 40 aufgeschraubt, wobei der Klemmring 41 mit einer umlaufenden Nut 42 zur Aufnahme der Wulst 39 ausgebildet ist. An dem Klemmring 41 ist ein O-Ring 45 in Art eines Anschlags angeordnet der zur Schallminderung dient, und an dem die Scheibe 26 bei einer vollständigen Öffnung des Ventils 10 zur Anlage gelangen kann. An dem Kolben 13 ist ein weiterer Klemmring 43 vorgesehen, wobei hier in dem Kolben 13 eine umlaufende Nut 44 ausgebildet ist, in die die Wulst 39 an dem Innenrand 37 des Dichtelements 36 eingelegt und dort geklemmt ist. Bei einer Bewegung des Kolbens 13 kommt es nun zu einer Verformung des Dichtelements 36 bzw. der Membran 35, wobei der Innenrand 37 und der Außenrand 38 bzw. die jeweiligen Wülste 39 nicht verformt werden, da diese fest fixiert sind. Da die Membran 35 bzw. das Dichtelement 36 sich im Wesentlichen frei verformen kann und somit nicht mit einer Reibkraft beaufschlagt wird, kann ein Verschleiß des Dichtelements wesentlich verringert werden. Weiter wird dadurch auch ein vergleichsweise größerer Kolbenhub ermöglicht, wodurch ein großer Volumenstrom über das Ventil 10 dosiert werden kann.

## Patentansprüche

1. Ventil (10), insbesondere für Gase, Luft, Sauerstoff, Brenngas, Erdgas, Wasserstoff oder dergleichen, wobei das Ventil ein Ventilgehäuse (11) und einen im Ventilgehäuse angeordneten verschiebbaren Kolben (13) aufweist, wobei der Kolben so gegenüber einem Ventilsitz (24) des Ventilgehäuses bewegbar ist, dass zwei Kammern (20, 21) gegeneinander absperrbar sind, wobei zwischen dem Kolben und einer Kolbenführungseinrichtung (14) eine Kolbendichteinrichtung (34) zur Abdichtung der Kammern ausgebildet ist,
**dadurch gekennzeichnet,**
**dass** die Kolbendichteinrichtung eine Membran (35) aufweist, die ein Dichtelement (36) ausbildet.

2. Ventil nach Anspruch 1,
**dadurch gekennzeichnet,**
**dass** das Dichtelement (36) elastisch ist, bevorzugt als eine Elastomerdichtung oder Gummidichtung ausgebildet ist.

3. Ventil nach Anspruch 1 oder 2,
**dadurch gekennzeichnet,**
**dass** das Dichtelement (36) während einer Bewegung des Kolbes (13) verformbar ausgebildet ist.

4. Ventil nach einem der vorangehenden Ansprüche,
**dadurch gekennzeichnet,**
**dass** das Dichtelement (36) kreisringförmig und/oder scheibenförmig ausgebildet ist.

5. Ventil nach einem der vorangehenden Ansprüche,
**dadurch gekennzeichnet,**
**dass** das Dichtelement (36) an dem Kolben (13) und/oder an dem Ventilgehäuse (11) geklemmt und/oder formschlüssig fixiert ist.

6. Ventil nach einem der vorangehenden Ansprüche,
**dadurch gekennzeichnet,**
**dass** das Dichtelement (36) mit einem Innenrand (37) und einem Außenrand (38) ausgebildet ist, wobei der Innenrand an dem Kolben (13) und der Außenrand an dem Ventilgehäuse (11) fixiert ist.

7. Ventil nach Anspruch 6,
**dadurch gekennzeichnet,**
**dass** das Dichtelement (36) mit Wülsten (39) ausgebildet ist, die jeweils an dem Innenrand (37) und dem Außenrand (38) des Dichtelements ausgebildet sind.

8. Ventil nach einem der vorangehenden Ansprüche,
**dadurch gekennzeichnet,**
**dass** einer Kammer (20) eine Leitung (29) zugeordnet ist, die zwei Wirkräume (31, 32) des Kolbens (13) dauernd verbindet, wobei die Wirkräume so ausgebildet sind, dass der Kolben druckentlastet ist.

9. Ventil nach einem der vorangehenden Ansprüche,
**dadurch gekennzeichnet,**
**dass** das Ventil (10) mit einem Kolbenhub von zumindest 1, 2, 3 oder 4 mm ausgebildet ist.

10. Ventil nach einem der vorangehenden Ansprüche,
**dadurch gekennzeichnet,**
**dass** das Ventil (10) nutzbar für einen Druck ≥ 1 bar, ≥ 2 bar, ≥ 3 bar oder ≥ 4 bar ausgebildet ist.

11. Ventil nach einem der vorangehenden Ansprüche,
**dadurch gekennzeichnet,**
**dass** das Ventil (10) nutzbar für einen Druck ≤ 1 bar, ≤ 2 bar, ≤ 3 bar, ≤ 4 oder ≤ 5 bar ausgebildet ist.

12. Ventil nach einem der vorangehenden Ansprüche,
**dadurch gekennzeichnet,**
**dass** das Ventil (10) ein direktgesteuertes Magnetventil ist, wobei der Kolben mit einem Elektromagneten (15) betätigbar ist.

13. Ventil nach einem der vorangehenden Ansprüche,
**dadurch gekennzeichnet,**
**dass** mit dem Ventil (10) zumindest 100, 200, 300, 400 oder 500 Schaltzyklen/Minute ausbildbar sind.

14. Ventil nach einem der vorangehenden Ansprüche,
**dadurch gekennzeichnet,**
**dass** zwischen dem Kolben (13) und dem Ventilsitz (24) eine Ventildichteinrichtung (25) ausgebildet ist, mittels der in einer Absperrstellung eine Abdichtung der beiden Kammern (20, 21) erfolgt, wobei der Kolben mittels einer Feder (33) in die Absperrstellung bewegbar ist.

15. Brennstoffdosiereinheit, Brenner oder dergleichen, mit zumindest einem Ventil (10), bevorzugt zwei Ventilen, nach einem der vorangehenden Ansprüche.

16. Ofen, Brennofen, Tunnelofen oder dergleichen, mit zumindest einer Brennstoffdosiereinheit nach Anspruch 15.

17. Verfahren zum Betrieb eines Ofens, Brennofen, Tunnelofen oder dergleichen, mit zumindest einer Brennstoffdosiereinheit mit zumindest einem Ventil (10), wobei in einem Ventilgehäuse (11) des Ventils ein Kolben (13) so gegenüber einem Ventilsitz (24) des Ventilgehäuses bewegt wird, dass zwei Kammern (20, 21) gegeneinander abgesperrt werden, wobei mittels einer Kolbendichteinrichtung (34), die zwischen dem Kolben und einer Kolbenführungseinrichtung (14) ausgebildet ist, die Kammern abgedichtet werden,
**dadurch gekennzeichnet,**
**dass** von einer Membran (35) der Kolbendichteinrichtung ein Dichtelement (36) ausgebildet wird, wobei die Membran während einer Bewegung des Kolbes verformt wird.

18. Verwendung eines Ventils (10) zur Dosierung von Wasserstoff einer Brennstoffdosiereinheit eines Ofens, Brennofen, Tunnelofen oder dergleichen, wobei das Ventil ein Ventilgehäuse (11) und einen im Ventilgehäuse angeordneten verschiebbaren Kolben (13) aufweist, wobei der Kolben so gegenüber einem Ventilsitz (24) des Ventilgehäuses bewegbar ist, dass zwei Kammern (20, 21) gegeneinander absperrbar sind, wobei zwischen dem Kolben und einer Kolbenführungseinrichtung (14) eine Kolbendichteinrichtung (34) zur Abdichtung der Kammern ausgebildet ist, wobei die Kolbendichteinrichtung eine Membran (35) aufweist, die ein Dichtelement (36)ausbildet.
